(19) Europäisches Patentamt
European Patent Office
Office européen des brevets

(11) **EP 3 179 329 B1**

(12) # EUROPEAN PATENT SPECIFICATION

(45) Date of publication and mention
of the grant of the patent:
**20.06.2018 Bulletin 2018/25**

(51) Int Cl.:
***G05B 19/042*** *(2006.01)*   ***G05B 13/02*** *(2006.01)*

(21) Application number: **16202027.5**

(22) Date of filing: **02.12.2016**

(54) **METHOD AND DEVICE FOR CONTROLLING INTELLIGENT DEVICE**

VERFAHREN UND VORRICHTUNG ZUR STEUERUNG EINER INTELLIGENTEN VORRICHTUNG

PROCÉDÉ ET DISPOSITIF DE COMMANDE D'UN DISPOSITIF INTELLIGENT

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **11.12.2015 CN 201510919429**

(43) Date of publication of application:
**14.06.2017 Bulletin 2017/24**

(73) Proprietor: **Xiaomi Inc.
Beijing 100085 (CN)**

(72) Inventors:
 • **LIU, Dongxu
 BEIJING 100085 (CN)**

 • **YU, Jiuping
 BEIJING 100085 (CN)**
 • **YANG, Nuo
 BEIJING 100085 (CN)**

(74) Representative: **Delumeau, François Guy et al
Cabinet Beau de Loménie
158, rue de l'Université
75340 Paris Cedex 07 (FR)**

(56) References cited:
**WO-A1-2013/058966    US-A1- 2012 185 101
US-B1- 6 216 956    US-B1- 8 554 376**

**Description**

**FIELD**

The present disclosure generally relates to the field of intelligent household appliances, and more particularly to a method and a device for controlling an intelligent device.

**BACKGROUND**

With users paying more attention to the quality of life, intelligent devices become more and more popular. Users often need to control an intelligent device manually during the use of the intelligent device so as to allow the intelligent device to operate. The process of controlling an intelligent device manually is complicated and brings inconvenience to users. Therefore, a method for controlling an intelligent device having a simple process of controlling is needed.

Document WO2013/058966 A1 discloses intelligent controllers that continuously, periodically, or intermittently calculate and display the time remaining until a control task is projected to be completed by the intelligent controller. In general, the intelligent controller employs multiple different models for the time behavior of one or more parameters or characteristics within a region or volume affected by one or more devices, systems, or other entities controlled by the intelligent controller. The intelligent controller collects data, over time, from which the models are constructed and uses the models to predict the time remaining until one or more characteristics or parameters of the region or volume reaches one or more specified values as a result of intelligent controller control of one or more devices, systems, or other entities.

**SUMMARY**

A method and a device for controlling an intelligent device are provided in the present disclosure to overcome one or more problems existed in related arts.

According to a first aspect the invention relates to a method for controlling a device; for example an intelligent device, is provided, the method comprising: acquiring a current time and a current environment state; determining a running time required to adjust the current environment state to a first target environment state, the first target environment state being an environment state at a target time, the target time being a time for controlling the intelligent device; and controlling the intelligent device based on the current time, the running time and the target time.

According to the invention, the method may further comprise, before the step of determining a running time required to adjust the current environment state to a first target environment state: selecting at least one valid environment state from a plurality of historical environment states, the historical environment states being environment states adjusted by the intelligent device before the current time; determining a first weighted value for the at least one valid environment state; and determining the first weighted value as the first target environment state.

In one embodiment, the environment state may relate to air conditions, eg. Air temperature or humidity. The environment state is not limited to air conditions. It could in particular also relate to API (Air pollution index), ambient noise, lightness...

In one embodiment, the step of controlling the intelligent device based on the current time, the running time and the target time may comprise: obtaining a predicted time by adding the current time and the running time; and controlling the intelligent device based on the predicted time and the target time.

In one embodiment, an intelligent device refers to a device comprising communication means.

In one embodiment, the step of controlling the intelligent device based on the predicted time and the target time may comprise: controlling the intelligent device when the predicted time is the same as the target time; or determining a first difference value between the target time and the predicted time, and controlling the intelligent device when the first difference value is less than a first specified time.

In one embodiment, the step of determining a first weighted value for the at least one valid environment state may comprise: acquiring a first historical date for the at least one valid environment state respectively to obtain at least one first historical date, the first historical date being a date on which an environment state was adjusted to the valid environment state by the intelligent device; determining at least one first weight using a specified function based on the at least one first historical date; and calculating a first weighted value for the at least one valid environment state based on the at least one first weight.

In one embodiment, the method may further comprise: receiving a first updating instruction, the first updating instruction carrying a second target environment state; and updating the plurality of historical environment states based on the second target environment state.

In one embodiment, the step of updating the plurality of historical environment states based on the second target environment state may comprise: acquiring a second historical date for the plurality of historical environment states respectively, the second historical date being a date on which an environment state was adjusted to the historical environment states by the intelligent device; selecting from the plurality of historical environment states a historical environment state having an earliest second historical date; and replacing the selected historical environment state with the second target environment state.

In one embodiment, the method may further comprise, before the step of determining a running time required to adjust the current environment state to a first target environment state: selecting at least one valid time from a plurality of historical times, the historical times being times for controlling the intelligent device before the current time; determining a second weighted value for the at least one valid time; and determining the second weighted value as the target time.

In one embodiment, the step of determining a second weighted value for the at least one valid time may comprise: acquiring a third historical date for the at least one valid time respectively to obtain at least one third historical date, the third historical date being a date for controlling the intelligent device at the valid time; determining at least one second weight using a specified function based on the at least one third historical date; and calculating a second weighted value for the at least one valid time based on the at least one second weight.

In one embodiment, the method may further comprise: acquiring, upon receiving a second updating instruction, a receiving time for receiving the second updating instruction; and updating the plurality of the historical times based on the receiving time.

In one embodiment, the step of updating the plurality of the historical times based on the receiving time may comprise: acquiring a fourth historical date for the plurality of historical times respectively, the fourth historical date being a date for controlling the intelligent device at the historical times; selecting from the plurality of historical times a historical time having an earliest fourth historical date; and replacing the selected historical time with the receiving time.

According to a second aspect, the invention relates to a first device for controlling, a second device, for example an intelligent device, is provided, the first device comprising: an acquiring module configured to acquire a current time and a current environment state; a first determining module configured to determine a running time required to adjust the current environment state to a first target environment state, the first target environment state being an environment state at a target time, the target time being a time for controlling the second device; and a controlling module configured to control the second device based on the current time, the running time and the target time.

In one embodiment, the controlling module may comprise: an adding unit configured to obtain a predicted time by adding the current time and the running time; and a controlling unit configured to control the intelligent device based on the predicted time and the target time.

In one embodiment, the controlling unit may comprise: a first controlling sub-unit configured to control the intelligent device when the predicted time is the same as the target time; or a second controlling sub-unit configured to determine a first difference value between the target time and the predicted time, and control the intelligent device when the first difference value is less than a first specified time.

In one embodiment, the device may further comprise: a first selecting module configured to select at least one valid environment state from a plurality of historical environment states, the historical environment states being environment states adjusted by the intelligent device before the current time; a second determining module configured to determine a first weighted value for the at least one valid environment state; and a third determining module configured to determine the first weighted value as the first target environment state.

In one embodiment, the second determining module may comprise: a first acquiring unit configured to acquire a first historical date for the at least one valid environment state respectively to obtain at least one first historical date, the first historical date being a date on which an environment state was adjusted to the valid environment state by the intelligent device; a first determining unit configured to determine at least one first weight using a specified function based on the at least one first historical date; and a first calculating unit configured to calculate a first weighted value for the at least one valid environment state based on the at least one first weight.

In one embodiment, the device may further comprise: a first receiving module configured to receive a first updating instruction, the first updating instruction carrying a second target environment state; and a first updating module configured to update the plurality of historical environment states based on the second target environment state.

In one embodiment, the first updating module may comprise: a second acquiring unit configured to acquire a second historical date for the plurality of historical environment states respectively, the second historical date being a date on which an environment state was adjusted to the historical environment states by the intelligent device; a first selecting unit configured to select from the plurality of historical environment states a historical environment state having an earliest second historical date; and a first replacing unit configured to replace the selected historical environment state with the second target environment state.

In one embodiment, the device may further comprise: a second selecting module configured to select at least one valid time from a plurality of historical times, the historical times being times for controlling the intelligent device before the current time; a fourth determining module configured to determine a second weighted value for the at least one valid time; and a fifth determining module configured to determine the second weighted value as the target time.

In one embodiment, the fourth determining module may comprise: a third acquiring unit configured to acquire a third historical date for the at least one valid time respectively to obtain at least one third historical date, the third historical date being a date for controlling the intelligent device at the valid time; a second determining unit configured to determine at least one second weight using a specified function based on the at least one third historical date; and a second calculating unit configured to calculate a second weighted value for the at least one valid time based on the at least one second weight.

In one embodiment, the device may further comprise: a second receiving module configured to acquire, upon receiving the second updating instruction, a receiving time for receiving a second updating instruction; and a second updating module configured to update the plurality of the historical times based on the receiving time.

In one embodiment, the second updating module may comprise: a fourth acquiring unit configured to acquire a fourth historical date for the plurality of historical times respectively, the fourth historical date being a date for controlling the intelligent device at the historical times; a second selecting unit configured to select from the plurality of historical times a historical time having an earliest fourth historical date; and a second replacing unit configured to replace the selected historical time with the receiving time.

According to a third aspect, the invention relates to a first device for controlling a second device, for example an intelligent device, is provided, the first device comprising: a processor; a memory for storing processor-executable instructions; wherein the processor is configured to: acquire a current time and a current environment state; determine a running time required to adjust the current environment state to a first target environment state, the first target environment state being an environment state at a target time, the target time being a time for controlling the second device; and control the second device based on the current time, the running time and the target time.

In one particular embodiment, the steps of the method for operating a television application are determined by computer program instructions.

Consequently, according to a fourth aspect, the invention is also directed to a computer program for executing the steps of a method for controlling an intelligent device as described above when this program is executed by a computer.

This program can use any programming language and take the form of source code, object code or a code intermediate between source code and object code, such as a partially compiled form, or any other desirable form.

The invention is also directed to a computer-readable information medium containing instructions of a computer program as described above.

The information medium can be any entity or device capable of storing the program. For example, the support can include storage means such as a ROM, for example a CD ROM or a microelectronic circuit ROM, or magnetic storage means, for example a hard disk.

Alternatively, the information medium can be an integrated circuit in which the program is incorporated, the circuit being adapted to execute the method in question or to be used in its execution.

In the embodiments of the present disclosure, the intelligent device may acquire the current time and the current environment state, determine the running time required to adjust the current environment state to the first target environment state, and then control the intelligent device automatically based on the current time, the running time and the target time. The control process is simple, and the operation overhead for a user is decreased.

It is to be understood that the forgoing general description and the following detailed description are illustrative and explanatory only, and are not intended to limit the present disclosure.

**BRIEF DESCRIPTION OF THE DRAWINGS**

The accompanying drawings, which are incorporated in and constitute a part of this specification, illustrate embodiments consistent with the present disclosure and, together with the description, serve to explain the principles of the present disclosure.

Fig. 1 is a flow chart illustrating a method for controlling an intelligent device according to an example embodiment of the present disclosure.

Fig. 2 is a flow chart illustrating another method for controlling an intelligent device according to an example embodiment of the present disclosure.

Fig. 3 is a schematic diagram illustrating a function graph of a specified function according to an example embodiment of the present disclosure.

Fig. 4 is a block diagram illustrating a first device for controlling an intelligent device according to an example embodiment of the present disclosure.

Fig. 5 is a block diagram illustrating a controlling module according to an example embodiment of the present disclosure.

Fig. 6 is a block diagram illustrating a controlling unit according to an example embodiment of the present disclosure.

Fig. 7 is a block diagram illustrating a second device for controlling an intelligent device according to an example embodiment of the present disclosure.

Fig. 8 is a block diagram illustrating a second determining module according to an example embodiment of the present disclosure.

Fig. 9 is a block diagram illustrating a third device for controlling an intelligent device according to an example embodiment of the present disclosure.

Fig. 10 is a block diagram illustrating a first updating module according to an example embodiment of the present disclosure.

Fig. 11 is a block diagram illustrating a fourth device for controlling an intelligent device according to an example embodiment of the present disclosure.

Fig. 12 is a block diagram illustrating a fourth determining module according to an example embodiment of the present disclosure.

Fig. 13 is a block diagram illustrating a fifth device for controlling an intelligent device according to an example embodiment of the present disclosure.

Fig. 14 is a block diagram illustrating a second updating module according to an example embodiment of the present disclosure.

Fig. 15 is a block diagram illustrating a sixth device for controlling an intelligent device according to an example embodiment of the present disclosure.

## DETAILED DESCRIPTION

Reference will now be made in detail to example embodiments, examples of which are illustrated in the accompanying drawings. The following description refers to the accompanying drawings in which same numbers in different drawings represent same or similar elements unless otherwise described. The implementations set forth in the following description of example embodiments do not represent all implementations consistent with the present disclosure. Instead, they are merely examples of device and methods consistent with aspects related to the present disclosure as recited in the appended claims.

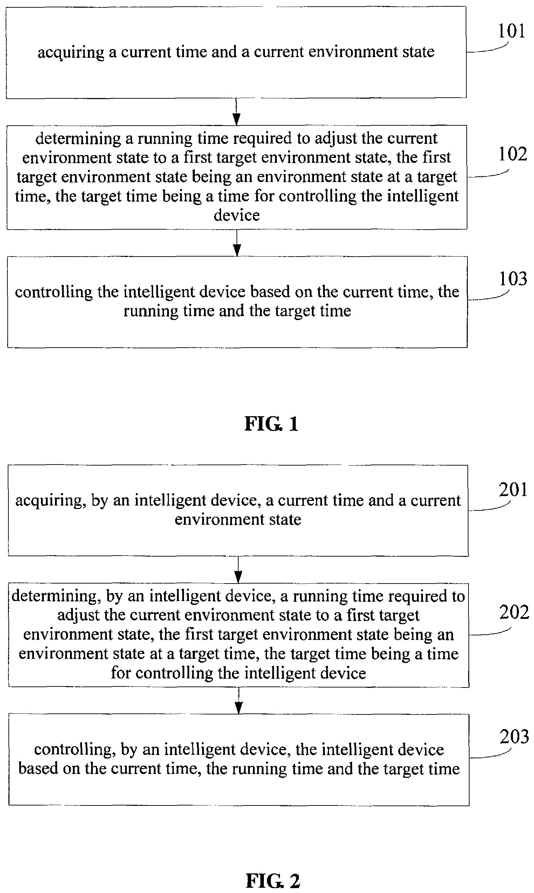

Fig. 1 is a flow chart illustrating a method for controlling an intelligent device according to an example embodiment of the present disclosure. The method may be used in an intelligent device. As shown in Fig. 1, the method may include the following steps.

In step 101, a current time and a current environment state may be acquired.

In step 102, a running time required to adjust the current environment state to a first target environment state may be determined, wherein the first target environment state may be an environment state at a target time, and the target time may be a time for controlling the intelligent device.

In step 103, the intelligent device may be controlled based on the current time, the running time and the target time.

In the embodiments of the present disclosure, the intelligent device may acquire the current time and the current environment state, determine the running time required to adjust the current environment state to the first target environment state, and then control the intelligent device automatically based on the current time, the running time and the target time. The control process is simple, and the operation overhead for a user is decreased.

In another embodiment of the present disclosure, the controlling the intelligent device based on the current time, the running time and the target time may comprise: obtaining a predicted time by adding the current time and the running time; and controlling the intelligent device based on the predicted time and the target time.

In another embodiment of the present disclosure, the controlling the intelligent device based on the predicted time and the target time may comprise: controlling the intelligent device when the predicted time is the same as the target time; or determining a first difference value between the target time and the predicted time, and controlling the intelligent device when the first difference value is less than a first specified time.

In another embodiment of the present disclosure, before the determining a running time required to adjust the current environment state to the first target environment state, the method may further comprise: selecting at least one valid environment state from a plurality of historical environment states, the historical environment states being environment states adjusted by the intelligent device before the current time; determining a first weighted value for the at least one valid environment state; and determining the first weighted value as the first target environment state.

In another embodiment of the present disclosure, the determining the first weighted value for the at least one valid environment state may comprise: acquiring a first historical date for the at least one valid environment state respectively to obtain at least one first historical date, the first historical date being a date on which an environment state was adjusted to the valid environment state by the intelligent device; determining at least one first weight using a specified function based on the at least one first historical date; and calculating a first weighted value for the at least one valid environment state based on the at least one first weight.

In another embodiment of the present disclosure, the method may further comprise: receiving a first updating instruction, the first updating instruction carrying a second target environment state; and updating the plurality of historical environment states based on the second target environment state.

In another embodiment of the present disclosure, the updating the plurality of historical environment states based on the second target environment state may comprise: acquiring a second historical date for the plurality of historical environment states respectively, the second historical date being a date on which an environment state was adjusted to the historical environment states by the intelligent device; selecting a historical environment state having an earliest second historical date from the plurality of historical environment states; and replacing the selected historical environment state with the second target environment state.

In another embodiment of the present disclosure, before determining the running time required to adjust the current environment state to the first target environment state, the method may further comprise: selecting at least one valid time from a plurality of historical times, the historical times being times for controlling the intelligent device before the current time; determining a second weighted value for the at least one valid time; and determining the second weighted value as the target time.

In another embodiment of the present disclosure, the determining the second weighted value for the at least one valid time may comprise: acquiring a third historical date for the at least one valid time respectively to obtain at least one third historical date, the third historical date being a date for controlling the intelligent device at the valid time; determining at least one second weight using a predetermined function based on the at least one third historical date; and calculating a second weighted value for the at least one valid time based on the at least one second weight.

In another embodiment of the present disclosure, the method may further comprise: upon receiving a second updating instruction, acquiring a receiving time for receiving the second updating instruction; and updating the plurality of the historical times based on the receiving time.

In another embodiment of the present disclosure, the updating the plurality of the historical times based on the receiving time may comprise: acquiring a fourth historical date for the plurality of historical times respectively, the fourth historical date being a date for controlling the intelligent device at the historical times; selecting a historical time having an earliest fourth historical date from the plurality of historical times; and replacing the selected historical time with the receiving time.

The above optional technical solutions may be combined in any manner to form optional embodiments of the present disclosure, which will not be detailed herein.

Fig. 2 is a flow chart illustrating another method for controlling an intelligent device according to an example embodiment of the present disclosure. As shown in Fig. 2, the method may include the following steps.

In step 201, the intelligent device may acquire a current time and a current environment state.

It is to be noted that the current environment state may be current ambient temperature, current ambient humidity, or the like, and is not limited in the embodiments of the present disclosure.

Reference may be made to related arts for the process of acquiring the current time and the current environment state by the intelligent device, which will not be detailed herein.

In addition, the intelligent device may be equipped with an environment detecting device by which the intelligent device may detect the current environment to acquire the current environment state. For example, the environment detecting device may be a temperature sensor if the intelligent device is an intelligent air-conditioner, and the environment detecting device may be a humidity sensor if the intelligent device is an intelligent humidifier, and the embodiments of the present disclosure are not intended to limit in the context.

In step 202, the intelligent device may determine a running time required to adjust the current environment state to a first target environment state, wherein the first target environment state may be an environment state at a target time, and the target time may be a time for controlling the intelligent device.

After acquiring the current environment state, the intelligent device may calculate the running time required to adjust the current environment state to the first target environment state according to its own power. Reference may be made to related arts for the calculation process, which will not be detailed herein.

It is to be noted that the first target environment state may be an environment state to which the current environment state will be adjusted by the intelligent device, as determined based on the operating habits of a user. In addition, the target time may be a time for controlling the intelligent device by the intelligent device, as determined based on the operating habits of a user.

Further, before determining the running time required to adjust the current environment state to the first target environment state, the intelligent device may determine the first target environment state and the target time based on the operating habits of the user. The operation of determining the first target environment state by the intelligent device may include the following step (a), and the operation of determining the target time by the intelligent device may include the following step (b).

(a). The intelligent device may select at least one valid environment state from a plurality of historical environment states, wherein the historical environment states may be environment states adjusted by the intelligent device before the current time; determine a first weighted value for the at least one valid environment state; and determine the first weighted value as the first target environment state.

For selecting at least one valid environment state by the intelligent device from a plurality of historical environment states, the intelligent device may select from the plurality of historical environment states the historical environment states within a specified range of environment states, and determine the selected historical environment states as valid environment states. Alternatively, the intelligent device may acquire abnormal environment states from the plurality of historical environment states, and determine those of the plurality of historical environment states other than the abnormal environment states as valid environment states. Of course, the intelligent device may select at least one valid environment state from a plurality of historical environment states by other ways, which are not limited in the embodiments of the present disclosure.

For example, the plurality of historical environment states may be 26°C (centigrade), 24°C, 14°C, 27°C, 24°C, 28°C, 32°C, 24°C, 16°C, and 33°C, and the specified range of environment states may be 20°C-30°C. The intelligent device may select the historical environment states within 20°C-30°C (26°C, 24°C, 27°C, 24°C, 28°C, and 24°C) from the plurality of historical environment states, and the selected historical environment states, namely 26°C, 24°C, 27°C, 24°C, 28°C, and 24°C, may be the valid environment states.

For example, the plurality of historical environment states may be 26°C, 24°C, 14°C, 27°C, 24°C, 28°C, 32°C, 24°C, 16°C, and 33°C, and the abnormal environment states acquired from the plurality of historical environment states by the intelligent device may be 14°C, 32°C, 16°C, and 33°C. The intelligent device may determine the historical environment states 26°C, 24°C, 27°C, 24°C, 28°C, and 24°C, other than the abnormal environment states (namely 14°C, 32°C, 16°C, and 33°C), in the plurality of historical environment states as the valid environment states.

It is to be noted that the valid environment states may be the environment states in the plurality of historical environment states that may be used to determine the first target environment state, and the abnormal environment states may be the environment states in the plurality of historical environment states that may be abnormal. In other words, the features of the abnormal environment states may differ from those of the historical environment states other than the abnormal environment states in the plurality of historical environment states.

In addition, the specified range of environment states may be preset, for example, 20°C-30°C, and the embodiments of the present disclosure are not intended to limit in the context.

When acquiring the abnormal environment states from the plurality of historical environment states, the intelligent device may acquire the abnormal environment states by its own anomaly detection module, or may acquire the abnormal environment states by an installed third-party anomaly detection application. The embodiments of the present disclosure are not intended to limit in the context.

It is to be noted that the third-party anomaly detection application may be used to detect the abnormal data in a plurality of data, the features of which differ from those of the data other than the abnormal data in the plurality of data. For example, the third-party anomaly detection application may be an SPSS (Statistical Product and Service Solutions) application, an SAS (Statistical Analysis System) application or the like, and the embodiments of the present disclosure are not intended to limit in the context.

When determining a first weighted value for the at least one valid environment state, the intelligent device may acquire a first historical date for the at least one valid environment state respectively to obtain at least one first historical date, wherein the first historical date may be a date on which an environment state was adjusted to the valid environment state by the intelligent device; determine at least one first weight using a specified function based on the at least one first historical date; and calculate a first weighted value for the at least one valid environment state based on the at least one first weight.

It is to be noted that the first historical date for the at least one valid environment state may be a date on which the at least one valid environment state was stored by the intelligent device respectively.

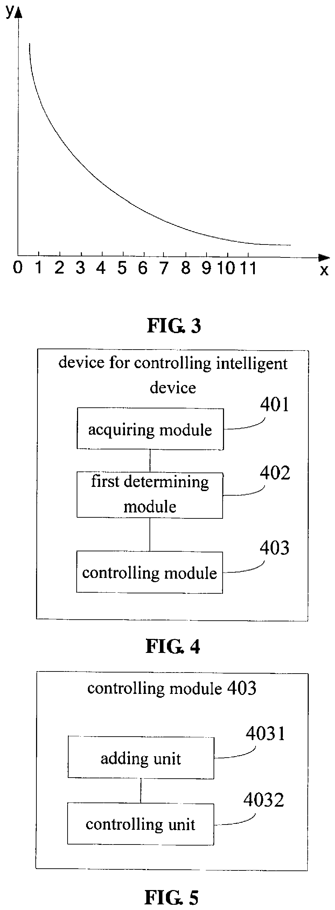

In addition, the specified function may be preset. For example, the specified function may be an inverse proportional function such as $y = \dfrac{k}{x}(k > 0, x > 0)$ or another function having a graph like in Fig. 3, which is not limited in the embodiments of the present disclosure.

The first weight may be used to represent the level to which the valid environment state corresponding to the first weight can be referred to in determining a first target environment state.

When determining the at least one first weight using the specified function based on the at least one first historical date, the intelligent device may acquire the current date, and calculate a second difference value between the current date and the at least one first historical date respectively to obtain at least one second difference value, and then determine the at least one first weight using the specified function based on the at least one second difference value.

For example, the at least one first historical date may be December 5, 2014, December 6, 2014, December 9, 2014, December 10, 2014, December 11, 2014, and December 15, 2014. The current date may be December 18, 2014. Then the second difference value between the current date and the at least one first historical date may be calculated respectively to obtain the at least one second difference value as 13, 12, 9, 8, 7, and 3, and the at least one first weight may be determined using the specified function based on the at least one second difference value of 13, 12, 9, 8, 7, and 3.

When determining the at least one first weight using the specified function based on the at least one second difference value, the intelligent device may take the least one second difference value as an independent variable for the specified function to calculate a dependent variable corresponding to the at least one second difference value respectively to obtain at least one dependent variable, and determine the at least one dependent variable as the at least one first weight.

For example, the specified function may be $y = \dfrac{1}{x}(x > 0)$, and the at least one second difference value may be 13, 12, 9, 8, 7, and 3. By substituting 13, 12, 9, 8, 7, and 3 into $y = \dfrac{1}{x}(x > 0)$, the dependent variables corresponding to 13, 12, 9, 8, 7, and 3 are obtained as $\dfrac{1}{13}$, $\dfrac{1}{12}$, $\dfrac{1}{9}$, $\dfrac{1}{8}$, $\dfrac{1}{7}$, and $\dfrac{1}{3}$, and the at least one first weight may be $\dfrac{1}{13}$, $\dfrac{1}{12}$, , $\dfrac{1}{9}$, $\dfrac{1}{8}$, $\dfrac{1}{7}$, and $\dfrac{1}{3}$.

When calculating a first weighted value for the at least one valid environment state based on the at least one first weight, the intelligent device may multiply the at least one valid environment state by the corresponding first weight to obtain at least one first value, and then add the at least one first value to obtain a first weighted value.

For example, the at least one valid environment state may be 26°C, 24°C, 27°C, 24°C, 28°C, and 24°C, and the first weight corresponding to 26°C may be $\dfrac{1}{13}$, the first weight corresponding to 24°C may be $\dfrac{1}{12}$, the first weight corresponding to 27°C may be $\dfrac{1}{9}$, the first weight corresponding to 24°C may be $\dfrac{1}{8}$, the first weight corresponding to 28°C may be $\dfrac{1}{7}$, and the first weight corresponding to 24°C may be $\dfrac{1}{3}$, then the first weighted value may be

$$26 \times \frac{1}{13} + 24 \times \frac{1}{12} + 27 \times \frac{1}{9} + 24 \times \frac{1}{8} + 28 \times \frac{1}{7} + 24 \times \frac{1}{3} = 22.$$

Since the intelligent device may determine the first target environment state based on the operating habits of a user, which may vary gradually due to the influence of some factors such as seasons and may be reflected by the plurality of historical environment states in the embodiments of the present disclosure, the plurality of historical environment states may be updated. In other words, the intelligent device may receive a first updating instruction carrying a second target environment state, and may update the plurality of historical environment states based on the second target environment state, so as to ensure that the plurality of historical environment states may reflect the latest operating habits of the user, thus ensuring the accuracy of the first target environment state determined based on the plurality of historical environment states.

It is to be noted that the first updating instruction may be used to adjust the current environment state to the second target environment state by the intelligent device. The first updating instruction may be triggered by user. For example, the user may trigger the first updating instruction by a specified operation such as clicking, sliding, voice and so on, and the embodiments of the present disclosure are not intended to limit in the context.

When updating the plurality of historical environment states based on the second target environment state, the intelligent device may acquire a second historical date for the plurality of historical environment states respectively, wherein the second historical date may be a date on which an environment state was adjusted to the historical environment states by the intelligent device; select a historical environment state having an earliest second historical date from the plurality of historical environment states; and replace the selected historical environment state with the second target environment state. Alternatively, the intelligent device may acquire at least one abnormal environment state from the plurality of historical environment states, and replace any of the at least one abnormal environment state with the second target environment state. Of course, the intelligent device may update the plurality of historical environment states based on the second target environment state by other ways, and the embodiments of the present disclosure are not intended to limit in the context.

It is to be noted that the second historical date may be a date on which the plurality of historical environment states were stored by the intelligent device respectively.

For example, the second target environment state may be 28°C, and the plurality of historical environment states may be 26°C, 24°C, 14°C, 27°C, 24°C, 28°C, 32°C, 24°C, 16°C, and 33°C, and the second historical date of 26°C, 24°C, 14°C, 27°C, 24°C, 28°C, 32°C, 24°C, 16°C, 33°C may be December 5, 2014, December 6, 2014, December 8, 2014, December 9, 2014, December 10, 2014, December 11, 2014, December 12, 2014, December 15, 2014, December 16, 2014, and December 17, 2014. The historical environment state having an earliest second historical date may be 26°C on December 5, 2014, then the intelligent device may replace the 26°C with 28°C.

As another example, the second target environment state may be 28°C, and the plurality of historical environment states may be 26°C, 24°C, 14°C, 27°C, 24°C, 28°C, 32°C, 24°C, 16°C, and 33°C, and the at least one abnormal environment state acquired from the plurality of historical environment states by the intelligent device may be 14°C, 32°C, 16°C, and 33°C, then the intelligent device may replace any of 14°C, 32°C, 16°C, and 33°C with 28°C.

(b). The intelligent device may select at least one valid time from a plurality of historical times, wherein the historical times may be times for controlling the intelligent device before the current time; determine a second weighted value for the at least one valid time; and determine the second weighted value as the target time.

When selecting at least one valid time by the intelligent device from the plurality of historical times, the intelligent device may select from the plurality of historical times the historical times within a specified time range, and determine the selected historical times as valid times. Alternatively, the intelligent device may acquire abnormal times from the plurality of historical times, and determine the historical times in the plurality of historical times other than the abnormal times as valid times. Of course, the intelligent device may select at least one valid time from a plurality of historical times by other ways, and the embodiments of the present disclosure are not intended to limit in the context.

For example, the plurality of historical times may be 18:26, 18:24, 13:14, 18:27, 18:24, 18:28, 15:32, 18:24, 23:16, and 17:33, and the specified time range may be 18:00-22:00. Then the intelligent device may select the historical times 18:26, 18:24, 18:27, 18:24, 18:28, and 18:24 within 18:00-22:00 from the plurality of historical times, and the selected historical times, namely 18:26, 18:24, 18:27, 18:24, 18:28, and 18:24, may be valid times.

As another example, the plurality of historical times may be 18:26, 18:24, 13:14, 18:27, 18:24, 18:28, 15:32, 18:24, 23:16, and 17:33, and the abnormal times acquired from the plurality of historical times by the intelligent device may be 13:14, 15:32, 23:16, and 17:33. Then the intelligent device may determine the historical times 18:26, 18:24, 18:27, 18:24, 18:28, and 18:24 other than the abnormal times namely 13:14, 15:32, 23:16, and 17:33 in the plurality of historical times as valid times.

It is to be noted that the valid times may be the times in the plurality of historical times that may be used to determine the target time, and the abnormal times may be the times in the plurality of historical times that may be abnormal. In other words, the features of the abnormal times may differ from those of the historical times other than the abnormal times in the plurality of historical times.

In addition, the specified time range may be preset, for example, 18:00-22:00, and the embodiments of the present disclosure are not intended to limit in the context.

When acquiring the abnormal times from the plurality of historical times, the intelligent device may acquire the abnormal times by its own anomaly detection module, and may also acquire the abnormal times by an installed third-party anomaly detection application, and the embodiments of the present disclosure are not intended to limit in the context.

When determining the second weighted value for the at least one valid time, the intelligent device may acquire a third historical date of the at least one valid time respectively to obtain at least one third historical date, wherein the third historical date may be a date for controlling the intelligent device at the valid time; determine at least one second weight using a specified function based on the at least one third historical date; and calculate a second weighted value for the at least one valid time based on the at least one second weight.

It is to be noted that the third historical date of the at least one valid time may be a date on which the at least one valid time was stored by the intelligent device respectively.

In addition, the second weight may be used to represent the level to which the valid time corresponding to the second weight can be referred to when determining the target time.

The process of determining at least one second weight using a specified function based on the at least one third historical date by the intelligent device may be similar to the process of determining at least one first weight in step (a) of step 202, which will not be detailed herein.

When calculating the second weighted value for the at least one valid time based on the at least one second weight, the intelligent device may multiply the at least one valid time by the corresponding second weight to obtain at least one second value, and then add the at least one second value together to obtain a second weighted value.

For example, the at least one valid time may be 18:26, 18:24, 18:27, 18:24, 18:28, and 18:24, and the second weight corresponding to 18:26 may be $\frac{1}{13}$, the second weight corresponding to 18:24 may be $\frac{1}{12}$, the second weight corresponding to 18:27 may be $\frac{1}{9}$, the second weight corresponding to 18:24 may be $\frac{1}{8}$, the second weight corresponding to 18:28 may be $\frac{1}{7}$, and the second weight corresponding to 18:24 may be $\frac{1}{3}$, then the second weighted value may be $18:26 \times \frac{1}{13} + 18:24 \times \frac{1}{12} + 18:27 \times \frac{1}{9} + 18:24 \times \frac{1}{8} + 18:28 \times \frac{1}{7} + 18:24 \times \frac{1}{3} = 18:22$.

Since the intelligent device may determine the target time based on the operating habits of a user, which may vary gradually due to the influence of some factors such as the season and may be reflected by the plurality of historical times in the embodiments of the present disclosure, the plurality of historical times may be updated. In other words, the intelligent device may acquire a receiving time for receiving a second updating instruction upon receiving the second updating instruction, and update the plurality of the historical times based on the receiving time, so as to ensure that the plurality of historical times may reflect the latest operating habits of a user, thus ensuring the accuracy of a target time determined based on the plurality of historical times.

It is to be noted that the second updating instruction may be used to control the intelligent device. The second updating instruction may be triggered by a user. For example, the user may trigger the second updating instruction by a specified operation, and the embodiments of the present disclosure are not intended to limit in the context.

When updating the plurality of the historical times based on the receiving time, the intelligent device may acquire a fourth historical date of the plurality of historical times respectively, wherein the fourth historical date may be a date for controlling the intelligent device at the historical times; select a historical time having an earliest fourth historical date from the plurality of historical times; and replace the selected historical time with the receiving time. Alternatively, the intelligent device may acquire at least one abnormal time from the plurality of historical times, and replace any of the at least one abnormal time with the receiving time. Of course, the intelligent device may update the plurality of historical times based on the receiving time by other ways, and the embodiments of the present disclosure are not intended to limit in the context.

It is to be noted that the fourth historical date may be a date on which the plurality of historical times were stored by the intelligent device respectively.

For example, the receiving time may be 18:39, and the plurality of historical times may be 18:26, 18:24, 13:14, 18:27, 18:24, 18:28, 15:32, 18:24, 23:16, and 17:33, and the fourth historical date for 18:26, 18:24, 13:14, 18:27, 18:24, 18:28, 15:32, 18:24, 23:16, and 17:33 may be December 5, 2014, December 6, 2014, December 8, 2014, December 9, 2014, December 10, 2014, December 11, 2014, December 12, 2014, December 15, 2014, December 16, 2014, and December 17, 2014. The historical time having the earliest fourth historical date is 18:26 on December 5, 2014, then the intelligent device may replace the18:26 with 18:39.

As another example, the receiving time may be 18:39, and the plurality of historical times may be 18:26, 18:24, 13:14, 18:27, 18:24, 18:28, 15:32, 18:24, 23:16, and 17:33, and the at least one abnormal time acquired from the plurality of historical times by the intelligent device may be 13:14, 15:32, 23:16, and 17:33, then the intelligent device may replace any of 13:14, 15:32, 23:16, and 17:33 with 18:39.

In step 203, the intelligent device may control the intelligent device based on the current time, the running time and the target time.

The intelligent device may predict that a user will adjust the current environment state to the first target environment state at the target time by the intelligent device. In other words, the user may expect the environment state at the target time to be the first target environment state. Therefore, in order to ensure the environment state at the target time to be the first target environment state, the intelligent device may obtain a predicted time by adding the current time and the running time, and control the intelligent device based on the predicted time and the target time.

In obtaining the predicted time, the intelligent device may obtain the predicted time in real time, or may obtain the predicted time at an interval of a second specified time. It is unnecessary, and a waste of the processing resources of the intelligent device, to obtain the predicted time if the intelligent device obtains the predicted time within a time period far from the target time, since the predicted time is far from the target time and the intelligent device will not be controlled to adjust the current environment state to the first target environment state. Therefore, the intelligent device may determine a target time period based on the target time included in the target time period, and obtain the predicted time in real time within the target time period or obtain the predicted time at an interval of the second specified time within the target time period, so as to avoid the intelligent device's obtaining the predicted time blindly within a time period far from the target time, saving the processing resources of the intelligent device.

In order to obtain the predicted time in real time, the intelligent device may acquire the current time and the current environment state in real time. In order to obtain the predicted time at the interval of the second specified time, the intelligent device may acquire the current time and the current environment state at the interval of the second specified time.

It is to be noted that the second specified time may be preset. For example, the second specified time may be 5 minutes, 6 minutes and so on. The embodiments of the present disclosure are not intended to limit in the context.

When controlling the intelligent device based on the predicted time and the target time, the intelligent device may obtain the predicted time in real time, and control the intelligent device when the predicted time is the same as the target time, thereby increasing the accuracy of controlling the intelligent device. Alternatively, the intelligent device may obtain the predicted time at the interval of the second specified time, and in this case, the intelligent device may determine a first difference value between the target time and the predicted time, and control the intelligent device when the first difference value is less than a first specified time, thereby saving the processing resources of the intelligent device.

It is to be noted that the first specified time may be preset, for example, 1 minute, 5 minutes and so on, and the embodiments of the present disclosure are not intended to limit in the context.

For example, a predicted time may be 18:22, and a target time may be 18:22, then the intelligent device may be controlled since the predicted time is the same as the target time.

As another example, the first specified time may be 5 minutes, the predicted time may be 18:19, and the target time may be 18:22, then the first difference value between the target time and the predicted time is 3 minutes. Therefore the intelligent device may be controlled since the first difference value (i.e. 3 minutes) is less than the first specified time (i.e. 5 minutes).

In the embodiments of the present disclosure, an intelligent device may acquire a current time and a current environment state, and determine a running time required to adjust the current environment state to a first target environment state. Then the intelligent device may obtain a predicted time by adding the current time and the running time, and control the intelligent device automatically based on the predicted time and the target time. The control process is simple, and the operation overhead of user is decreased. In the embodiments of the present disclosure, the intelligent device may be controlled in advance before a target time to allow the intelligent device to operate, so as to ensure that the current environment state may be adjusted at a target time to a first target environment state needed by the user, increasing the user experience.

Fig. 4 is a block diagram illustrating a device for controlling an intelligent device according to an example embodiment of the present disclosure. Referring to Fig. 4, the device may comprise: an acquiring module 401 configured to acquire a current time and a current environment state; a first determining module 402 configured to determine a running time required to adjust the current environment state to a first target environment state, the first target environment state being an environment state at a target time, the target time being a time for controlling the intelligent device; and a controlling module 403 configured to control the intelligent device based on the current time, the running time and the target time.

Referring to Fig. 5, in another embodiment of the present disclosure, the controlling module 403 may comprise: an adding unit 4031 configured to obtain a predicted time by adding the current time and the running time; and a controlling unit 4032 configured to control the intelligent device based on the predicted time and the target time.

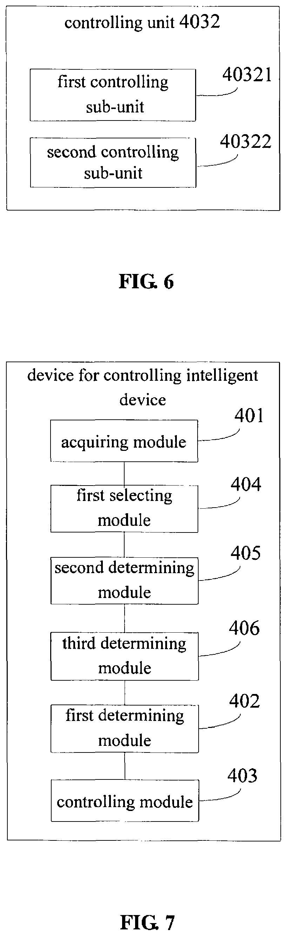

Referring to Fig. 6, in another embodiment of the present disclosure, the controlling unit 4032 may comprise: a first controlling sub-unit 40321 configured to control the intelligent device when the predicted time is the same as the target time; or a second controlling sub-unit 40322 configured to determine a first difference value between the target time and the predicted time, and control the intelligent device when the first difference value is less than a first specified time.

Referring to Fig. 7, in another embodiment of the present disclosure, the device may further comprise: a first selecting module 404 configured to select at least one valid environment state from a plurality of historical environment states, the historical environment states being environment states adjusted by the intelligent device before the current time; a second determining module 405 configured to determine a first weighted value for the at least one valid environment state; and a third determining module 406 configured to determine the first weighted value as the first target environment state.

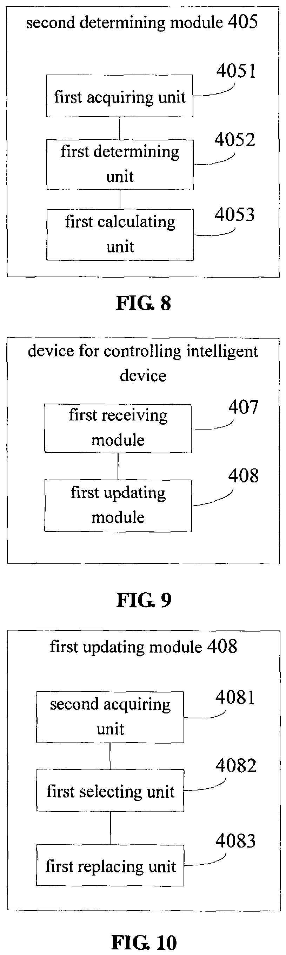

Referring to Fig. 8, in another embodiment of the present disclosure, the second determining module 405 may comprise: a first acquiring unit 4051 configured to acquire a first historical date of for the at least one valid environment state respectively to obtain at least one first historical date, the first historical date being a date on which an environment state was adjusted to the valid environment state by the intelligent device; a first determining unit 4052 configured to determine at least one first weight using a specified function based on the at least one first historical date; and a first calculating unit 4053 configured to calculate a first weighted value for the at least one valid environment state based on the at least one first weight.

Referring to Fig. 9, in another embodiment of the present disclosure, the device may further comprise: a first receiving module 407 configured to receive a first updating instruction, the first updating instruction carrying a second target environment state; and a first updating module 408 configured to update the plurality of historical environment states based on the second target environment state.

Referring to Fig. 10, in another embodiment of the present disclosure, the first updating module 408 may comprise: a second acquiring unit 4081 configured to acquire a second historical date of for the plurality of historical environment states respectively, the second historical date being a date on which an environment state was adjusted to the historical environment states by the intelligent device; a first selecting unit 4082 configured to select from the plurality of historical environment states a historical environment state having an earliest second historical date; and a first replacing unit 4083 configured to replace the selected historical environment state with the second target environment state.

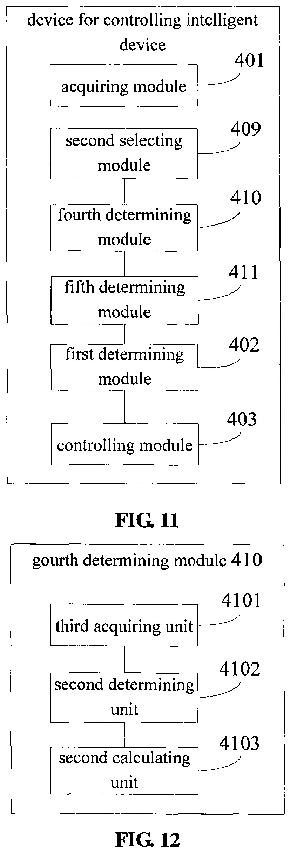

Referring to Fig. 11, in another embodiment of the present disclosure, the device may further comprise: a second selecting module 409 configured to select at least one valid time from a plurality of historical times, the historical times being times for controlling the intelligent device before the current time; a fourth determining module 410 configured to determine a second weighted value for the at least one valid time; and a fifth determining module 411 configured to determine the second weighted value as the target time.

Referring to Fig. 12, in another embodiment of the present disclosure, the fourth determining module 410 may comprise: a third acquiring unit 4101 configured to acquire a third historical date for the at least one valid time respectively to obtain at least one third historical date, the third historical date being a date for controlling the intelligent device at the valid time; a second determining unit 4102 configured to determine at least one second weight using a specified function based on the at least one third historical date; and a second calculating unit 4103 configured to calculate a second weighted value for the at least one valid time based on the at least one second weight.

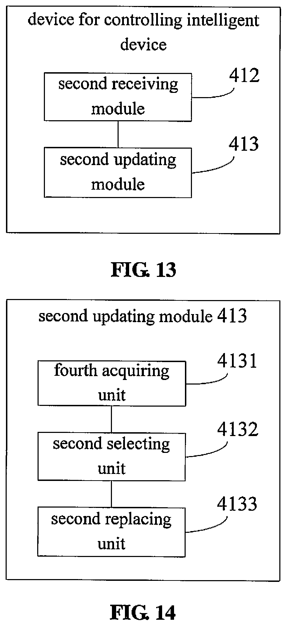

Referring to Fig. 13, in another embodiment of the present disclosure, the device may further comprise: a second receiving module 412 configured to acquire, upon receiving the second updating instruction, a receiving time for receiving a second updating instruction; and a second updating module 413 configured to update the plurality of the historical times based on the receiving time.

Referring to Fig. 14, in another embodiment of the present disclosure, the second updating module 413 may comprise: a fourth acquiring unit 4131 configured to acquire a fourth historical date for the plurality of historical times respectively, the fourth historical date being a date for controlling the intelligent device at the historical times; a second selecting unit 4132 configured to select from the plurality of historical times a historical time having an earliest fourth historical date; and a second replacing unit 4133 configured to replace the selected historical time with the receiving time.

In the embodiments of the present disclosure, the intelligent device may acquire the current time and the current environment state, determine the running time required to adjust the current environment state to the first target environment state, and then control the intelligent device automatically based on the current time, the running time and the target time. The control process is simple, and the operation overhead for a user is decreased.

With respect to the devices in above embodiments, specific manners in which respective modules perform operations have been described in detail in embodiments related to methods, which will not be elaborated herein.

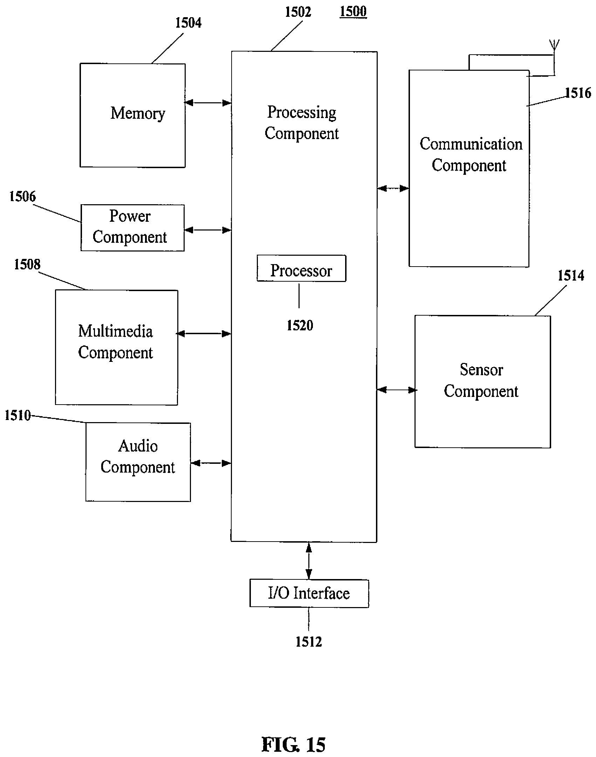

Fig. 15 is a block diagram illustrating a device 1500 for controlling an intelligent device according to an example embodiment of the present disclosure. For example, the device 1500 may be an intelligent device.

Referring to Fig. 15, the device 1500 may include one or more of the following components: a processing component 1502, a memory 1504, a power component 1506, a multimedia component 1508, an audio component 1510, an input/output (I/O) interface 1512, a sensor component 1514, and a communication component 1516.

The processing component 1502 typically controls overall operations of the device 1500, such as the operations associated with display, data communications, and recording operations. The processing component 1502 may include one or more processors 1520 to execute instructions to perform all or part of the steps in the above described methods. Moreover, the processing component 1502 may include one or more modules which facilitate the interaction between the processing component 1502 and other components. For instance, the processing component 1502 may include a multimedia module to facilitate the interaction between the multimedia component 1508 and the processing component 1502.

The memory 1504 is configured to store various types of data to support the operation of the device 1500. Examples of such data include instructions for any applications or methods operated on the device 1500, environmental states, times, etc. The memory 1504 may be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 1506 provides power to various components of the device 1500. The power component 1506 may include a power management system, one or more power sources, and any other components associated with the generation, management, and distribution of power in the device 1500.

The multimedia component 1508 includes a screen providing an output interface between the device 1500 and the user. In some embodiments, the screen may include a liquid crystal display (LCD) and a touch panel (TP). If the screen includes the touch panel, the screen may be implemented as a touch screen to receive input signals from the user. The touch panel includes one or more touch sensors to sense touches, swipes, and gestures on the touch panel. The touch sensors may not only sense a boundary of a touch or swipe action, but also sense a period of time and a pressure associated with the touch or swipe action.

The audio component 1510 is configured to output and/or input audio signals. For example, the audio component 1510 includes a microphone ("MIC") configured to receive an external audio signal when the device 1500 is in an operation mode, such as a recording mode and a voice recognition mode. The received audio signal may be further stored in the memory 1504 or transmitted via the communication component 1516. In some embodiments, the audio component 1510 further includes a speaker to output audio signals.

The I/O interface 1512 provides an interface between the processing component 1502 and peripheral interface modules, such as a keyboard, a click wheel, buttons, and the like. The buttons may include, but are not limited to, a home button, a volume button, a starting button, and a locking button.

The sensor component 1514 includes one or more sensors to provide status assessments of various aspects of the device 1500. For instance, the sensor component 1514 may detect an open/closed status of the device 1500, relative positioning of components, e.g., the display and the keypad, of the device 1500, a change in position of the device 1500 or a component of the device 1500, a presence or absence of user contact with the device 1500, an orientation or an acceleration/deceleration of the device 1500, and a change in temperature of the device 1500. The sensor component 1514 may include a proximity sensor configured to detect the presence of nearby objects without any physical contact. The sensor component 1514 may also include a light sensor, such as a CMOS or CCD image sensor, for use in imaging applications. In some embodiments, the sensor component 1514 may also include an accelerometer sensor, a gyroscope sensor, a magnetic sensor, a pressure sensor, or a temperature sensor.

The communication component 1516 is configured to facilitate communication, wired or wirelessly, between the device 1500 and other devices. The device 1500 can access a wireless network based on a communication standard, such as WiFi, 2G, or 3G, or a combination thereof. In one example embodiment, the communication component 1516 receives a broadcast signal or broadcast associated information from an external broadcast management system via a broadcast channel. In one example embodiment, the communication component 1516 further includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In example embodiments, the device 1500 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, for performing the above described methods.

In example embodiments, there is also provided a non-transitory computer readable storage medium including instructions, such as included in the memory 1504, executable by the processor 1520 in the device 1500, for performing the above-described methods. For example, the non-transitory computer-readable storage medium may be a ROM, a random access memory (RAM), a CD-ROM, a magnetic tape, a floppy disc, an optical data storage device, and the like.

A non-transitory computer readable storage medium having stored therein instructions that, when executed by the processor of the device 1500, causes the device 1500 to perform the above described method for controlling an intelligent device, comprising: acquiring a current time and a current environment state; determining a running time required to adjust the current environment state to a first target environment state, the first target environment state being an environment state at a target time, the target time being a time for controlling the intelligent device; and controlling the intelligent device based on the current time, the running time and the target time.

In another embodiment of the present disclosure, the controlling the intelligent device based on the current time, the running time and the target time may comprise: obtaining a predicted time by adding the current time and the running time; and controlling the intelligent device based on the predicted time and the target time..

In another embodiment of the present disclosure, the controlling the intelligent device based on the predicted time and the target time may comprise: controlling the intelligent device when the predicted time is the same as the target time; or determining a first difference value between the target time and the predicted time, and controlling the intelligent device when the first difference value is less than a first specified time.

In another embodiment of the present disclosure, the method may further comprise, before the determining a running time required to adjust the current environment state to a first target environment state: selecting at least one valid environment state from a plurality of historical environment states, the historical environment states being environment states adjusted by the intelligent device before the current time; determining a first weighted value for the at least one valid environment state; and determining the first weighted value as the first target environment state.

In another embodiment of the present disclosure, the determining a first weighted value for the at least one valid environment state may comprise: acquiring a first historical date for the at least one valid environment state respectively to obtain at least one first historical date, the first historical date being a date on which an environment state was adjusted to the valid environment state by the intelligent device; determining at least one first weight using a specified function based on the at least one first historical date; and calculating a first weighted value for the at least one valid environment state based on the at least one first weight.

In another embodiment of the present disclosure, the method may further comprise: receiving a first updating instruction, the first updating instruction carrying a second target environment state; and updating the plurality of historical environment states based on the second target environment state.

In another embodiment of the present disclosure, the updating the plurality of historical environment states based on the second target environment state may comprise: acquiring a second historical date for the plurality of historical environment states respectively, the second historical date being a date on which an environment state was adjusted to the historical environment states by the intelligent device; selecting from the plurality of historical environment states a historical environment state having an earliest second historical date; and replacing the selected historical environment state with the second target environment state.

In another embodiment of the present disclosure, the method may further comprise, before the determining a running time required to adjust the current environment state to a first target environment state: selecting at least one valid time from a plurality of historical times, the historical times being times for controlling the intelligent device before the current time; determining a second weighted value for the at least one valid time; and determining the second weighted value as the target time.

In another embodiment of the present disclosure, the determining a second weighted value for the at least one valid time may comprise: acquiring a third historical date for the at least one valid time respectively to obtain at least one third historical date, the third historical date being a date for controlling the intelligent device at the valid time; determining at least one second weight using a specified function based on the at least one third historical date; and calculating a second weighted value for the at least one valid time based on the at least one second weight.

In another embodiment of the present disclosure, the method may further comprise: acquiring, upon receiving a second updating instruction, a receiving time for receiving the second updating instruction; and updating the plurality of the historical times based on the receiving time.

In another embodiment of the present disclosure, the updating the plurality of the historical times based on the receiving time may comprise: acquiring a fourth historical date for the plurality of historical times respectively, the fourth historical date being a date for controlling the intelligent device at the historical times; selecting from the plurality of historical times a historical time having an earliest fourth historical date; and replacing the selected historical time with the receiving time.

In the embodiments of the present disclosure, the intelligent device may acquire the current time and the current environment state, determine the running time required to adjust the current environment state to the first target environment state, and then control the intelligent device automatically based on the current time, the running time and the target time. The control process is simple, and the operation overhead for a user is decreased.

**Claims**

1. A method for controlling an intelligent device, **characterized in** comprising:

    acquiring (101) a current time and a current environment state;
    determining (102) a running time required to adjust the current environment state to a first target environment state, the first target environment state being an environment state at a target time, the target time being a time for controlling the intelligent device; and
    controlling (103) the intelligent device based on the current time, the running time and the target time,
    said method being **characterized in that** it further comprises, before said determining (102) step :

    selecting at least one valid environment state from a plurality of historical environment states, the historical environment states being environment states adjusted by the intelligent device before the current time;
    determining a first weighted value for the at least one valid environment state; and
    determining the first weighted value as the first target environment state.

2. The method of claim 1, wherein the controlling (103) the intelligent device based on the current time, the running time and the target time comprises:

    obtaining a predicted time by adding the current time and the running time; and
    controlling the intelligent device based on the predicted time and the target time.

3. The method of claim 2, wherein the controlling (103) the intelligent device based on the predicted time and the target time comprises:

    controlling the intelligent device when the predicted time is the same as the target time; or
    determining a first difference value between the target time and the predicted time, and controlling the intelligent device when the first difference value is less than a first specified time.

4. The method of claim 1, wherein the determining (102) a first weighted value for the at least one valid environment state comprises:

acquiring a first historical date for the at least one valid environment state respectively to obtain at least one first historical date, the first historical date being a date on which an environment state was adjusted to the valid environment state by the intelligent device;
determining at least one first weight using a specified function based on the at least one first historical date; and
calculating a first weighted value for the at least one valid environment state based on the at least one first weight.

5. The method of claim 1, further comprising:

receiving a first updating instruction, the first updating instruction carrying a second target environment state; and
updating the plurality of historical environment states based on the second target environment state.

6. The method of claim 5, wherein the updating the plurality of historical environment states based on the second target environment state comprises:

acquiring a second historical date for the plurality of historical environment states respectively, the second historical date being a date on which an environment state was adjusted to the historical environment states by the intelligent device;
selecting from the plurality of historical environment states a historical environment state having an earliest second historical date; and
replacing the selected historical environment state with the second target environment state.

7. The method of any of claims 1-6, further comprising, before the determining (102) a running time required to adjust the current environment state to a first target environment state:

selecting at least one valid time from a plurality of historical times, the historical times being times for controlling the intelligent device before the current time;
determining a second weighted value for the at least one valid time; and
determining the second weighted value as the target time.

8. The method of claim 7, wherein the determining (102) a second weighted value for the at least one valid time comprises:

acquiring a third historical date for the at least one valid time respectively to obtain at least one third historical date, the third historical date being a date for controlling the intelligent device at the valid time;
determining at least one second weight using a specified function based on the at least one third historical date; and
calculating a second weighted value for the at least one valid time based on the at least one second weight.

9. The method of claim 7 or 8, further comprising:

acquiring, upon receiving a second updating instruction, a receiving time for receiving the second updating instruction; and
updating the plurality of the historical times based on the receiving time.

10. The method of claim 9, wherein the updating the plurality of the historical times based on the receiving time comprises:

acquiring a fourth historical date for the plurality of historical times respectively, the fourth historical date being a date for controlling the intelligent device at the historical times;
selecting from the plurality of historical times a historical time having an earliest fourth historical date; and
replacing the selected historical time with the receiving time.

11. An apparatus for controlling an intelligent device, **characterized in** the apparatus comprises components for performing a method for controlling an intelligent device according to any one of claims 1 to 10.

12. A device for controlling an intelligent device, **characterized in** comprising:

a processor (1520);
a memory (1504) for storing processor-executable instructions;
wherein the processor (1520) is configured to perform a method for controlling an intelligent device according to any one of claims 1 to 10,

13. A computer program including instructions for executing the steps of a method for controlling an intelligent device according to any one of claims 1 to 10 when said program is executed by a computer.

14. A recording medium readable by a computer and having recorded thereon a computer program including instructions for executing the steps of a method for controlling an intelligent device according to any one of claims 1 to 10.

**Patentansprüche**

1. Verfahren zum Steuern einer intelligenten Vorrichtung, **dadurch gekennzeichnet, dass** es umfasst:

Erfassen (101) einer aktuellen Zeit und eines aktuellen Umgebungszustands,
Bestimmen (102) einer Laufzeit, die benötigt wird, um den aktuellen Umgebungszustand auf einen ersten Zielumgebungszustand einzustellen, wobei der erste Zielumgebungszustand ein Umgebungszustand zu einer Zielzeit ist, wobei die Zielzeit eine Zeit zum Steuern der intelligenten Vorrichtung ist, und
Steuern (103) der intelligenten Vorrichtung auf Grundlage der aktuellen Zeit, der Laufzeit und der Zielzeit, wobei das Verfahren **dadurch gekennzeichnet ist, dass** es ferner vor dem Bestimmungsschritt (102) umfasst:

Auswählen mindestens eines gültigen Umgebungszustands aus mehreren historischen Umgebungszuständen, wobei die historischen Umgebungszustände Umgebungszustände sind, die durch die intelligente Vorrichtung vor der aktuellen Zeit eingestellt werden,
Bestimmen eines ersten gewichteten Werts für den mindestens einen gültigen Umgebungszustand und Bestimmen des ersten gewichteten Werts als den ersten Zielumgebungszustand.

2. Verfahren nach Anspruch 1, wobei das Steuern (103) der intelligenten Vorrichtung auf Grundlage der aktuellen Zeit, der Laufzeit und der Zielzeit umfasst:

Erhalten einer vorhergesagten Zeit durch Hinzufügen der aktuellen Zeit und der Laufzeit und
Steuern der intelligenten Vorrichtung auf Grundlage der vorhergesagten Zeit und der Zielzeit.

3. Verfahren nach Anspruch 2, wobei das Steuern (103) der intelligenten Vorrichtung auf Grundlage der vorhergesagten Zeit und der Zielzeit umfasst:

Steuern der intelligenten Vorrichtung, wenn die vorhergesagte Zeit dieselbe wie die Zielzeit ist, oder
Bestimmen eines ersten Differenzwerts zwischen der Zielzeit und der vorhergesagten Zeit, und Steuern der intelligenten Vorrichtung, wenn der erste Differenzwert geringer als eine erste spezifizierte Zeit ist.

4. Verfahren nach Anspruch 1, wobei das Bestimmen (102) eines ersten gewichteten Werts für den mindestens einen gültigen Umgebungszustand umfasst:

Erfassen jeweils eines ersten historischen Datums für den mindestens einen gültigen Umgebungszustand, um mindestens ein erstes historisches Datum zu erhalten, wobei das erste historische Datum ein Datum ist, an welchem ein Umgebungszustand auf den gültigen Umgebungszustand durch die intelligente Vorrichtung eingestellt wurde,
Bestimmen mindestens eines ersten Gewichts unter Verwendung einer spezifizierten Funktion auf Grundlage des mindestens einen ersten historischen Datums, und
Berechnen eines ersten gewichteten Werts für den mindestens einen gültigen Umgebungszustand auf Grundlage des mindestens einen ersten Gewichts.

5. Verfahren nach Anspruch 1, ferner umfassend:

Empfangen eines ersten Aktualisierungsbefehls, wobei der erste Aktualisierungsbefehl einen zweiten Zielumgebungszustand überträgt, und

Aktualisieren der mehreren historischen Umgebungszustände auf Grundlage des zweiten Zielumgebungszustands.

6. Verfahren nach Anspruch 5, wobei das Aktualisieren der mehreren historischen Umgebungszustände auf Grundlage des zweiten Zielumgebungszustands umfasst:

Erfassen jeweils eines zweiten historischen Datums für die mehreren historischen Umgebungszustände, wobei das zweite historische Datum ein Datum ist, an welchem ein Umgebungszustand auf die historischen Umgebungszustände durch die intelligente Vorrichtung eingestellt wurde,
Auswählen aus den mehreren historischen Umgebungszuständen eines historischen Umgebungszustands, der ein frühstes zweites historisches Datum aufweist, und
Ersetzen des ausgewählten historischen Umgebungszustands durch den zweiten Zielumgebungszustand.

7. Verfahren nach einem der Ansprüche 1 - 6, ferner umfassend vor dem Bestimmen (102) einer Laufzeit, die benötigt wird, um den aktuellen Umgebungszustand auf einen ersten Zielumgebungszustand einzustellen:

Auswählen mindestens einer gültigen Zeit aus mehreren historischen Zeiten, wobei die historischen Zeiten Zeiten zur Steuerung der intelligenten Vorrichtung vor der aktuellen Zeit sind,
Bestimmen eines zweiten gewichteten Werts für die mindestens eine gültige Zeit und
Bestimmen des zweiten gewichteten Werts als die Zielzeit.

8. Verfahren nach Anspruch 7, wobei das Bestimmen (102) eines zweiten gewichteten Werts für die mindestens eine gültige Zeit umfasst:

Erfassen jeweils eines dritten historischen Datums für die mindestens eine gültige Zeit, um mindestens ein drittes historisches Datum zu erhalten, wobei das dritte historische Datum ein Datum zur Steuerung der intelligenten Vorrichtung zu der gültigen Zeit ist,
Bestimmen mindestens eines zweiten Gewichts unter Verwendung einer spezifizierten Funktion auf Grundlage des mindestens einen dritten historischen Datums und
Berechnen eines zweiten gewichteten Werts für die mindestens eine gültige Zeit auf Grundlage des mindestens einen zweiten Gewichts.

9. Verfahren nach Anspruch 7 oder 8, ferner umfassend:

Erfassen, nach dem Empfangen eines zweiten Aktualisierungsbefehls, einer Empfangszeit zum Empfangen des zweiten Aktualisierungsbefehls und
Aktualisieren der mehreren historischen Zeiten auf Grundlage der Empfangszeit.

10. Verfahren nach Anspruch 9, wobei das Aktualisieren der mehreren historischen Zeiten auf Grundlage der Empfangszeit umfasst:

Erfassen jeweils eines vierten historischen Datums für die mehreren historischen Zeiten, wobei das vierte historische Datum ein Datum zur Steuerung der intelligenten Vorrichtung zu den historischen Zeiten ist,
Auswählen aus den mehreren historischen Zeiten einer historischen Zeit, die ein frühstes viertes historisches Datum aufweist, und
Ersetzen der ausgewählten historischen Zeit durch die Empfangszeit.

11. Vorrichtung zur Steuerung einer intelligenten Vorrichtung, **dadurch gekennzeichnet, dass** die Vorrichtung Komponenten zur Durchführung eines Verfahrens zur Steuerung einer intelligenten Vorrichtung nach einem der Ansprüche 1 bis 10 umfasst.

12. Vorrichtung zur Steuerung einer intelligenten Vorrichtung, **dadurch gekennzeichnet, dass** sie umfasst:

einen Prozessor (1520),
einen Speicher (1504) zum Speichern von von einem Prozessor ausführbaren Befehlen,
wobei der Prozessor (1520) konfiguriert ist, um ein Verfahren zur Steuerung einer intelligenten Vorrichtung nach einem der Ansprüche 1 bis 10 durchzuführen.

**13.** Computerprogramm, das Befehle zur Ausführung der Schritte eines Verfahrens zur Steuerung einer intelligenten Vorrichtung nach einem der Ansprüche 1 bis 10 beinhaltet, wenn das Programm von einem Computer ausgeführt wird.

**14.** Aufzeichnungsmedium, das von einem Computer gelesen werden kann und auf dem ein Computerprogramm aufgezeichnet ist, das Befehle zur Ausführung der Schritte eines Verfahrens zur Steuerung einer intelligenten Vorrichtung nach einem der Ansprüche 1 bis 10 beinhaltet.

**Revendications**

**1.** Procédé de commande d'un dispositif intelligent, **caractérisé en ce qu'**il comprend :

l'acquisition (101) d'un temps courant et d'un état d'environnement courant ;
la détermination (102) d'un temps d'exécution requis pour ajuster l'état d'environnement courant à un premier état d'environnement cible, le premier état d'environnement cible étant un état d'environnement à un temps cible, le temps cible étant un temps pour commander le dispositif intelligent ; et
la commande (103) du dispositif intelligent sur la base du temps courant, du temps d'exécution et du temps cible, ledit procédé étant **caractérisé en ce qu'**il comprend en outre, avant ladite étape de détermination (102) :

la sélection d'au moins un état d'environnement valable parmi une pluralité d'états d'environnement historiques, les états d'environnement historiques étant des états d'environnement ajustés par le dispositif intelligent avant le temps courant ;
la détermination d'une première valeur pondérée pour le au moins un état d'environnement valable ; et
la détermination de la première valeur pondérée en tant que premier état d'environnement cible.

**2.** Procédé selon la revendication 1, dans lequel la commande (103) du dispositif intelligent sur la base du temps courant, du temps d'exécution et du temps cible comprend :

l'obtention d'un temps prévu en additionnant le temps courant et le temps d'exécution ; et
la commande du dispositif intelligent sur la base du temps prévu et du temps cible.

**3.** Procédé selon la revendication 2, dans lequel la commande (103) du dispositif intelligent sur la base du temps prévu et du temps cible comprend :

la commande du dispositif intelligent lorsque le temps prévu est le même que le temps cible ; ou
la détermination d'une première valeur de différence entre le temps cible et le temps prévu, et la commande du dispositif intelligent lorsque la première valeur de différence est inférieure à un premier temps spécifié.

**4.** Procédé selon la revendication 1, dans lequel la détermination (102) d'une première valeur pondérée pour le au moins un état d'environnement valable comprend :

l'acquisition d'une première date historique pour le au moins un état d'environnement valable respectivement pour obtenir au moins une première date historique, la première date historique étant une date à laquelle un état d'environnement avait été ajusté à l'état d'environnement valable par le dispositif intelligent ;
la détermination d'au moins un premier poids à l'aide d'une fonction spécifiée sur la base de la au moins une première date historique ; et
le calcul d'une première valeur pondérée pour le au moins un état d'environnement valable sur la base du au moins un premier poids.

**5.** Procédé selon la revendication 1, comprenant en outre :

la réception d'une première instruction d'actualisation, la première instruction d'actualisation comportant un second état d'environnement cible ; et
l'actualisation de la pluralité d'états d'environnement historiques sur la base du second état d'environnement cible.

**6.** Procédé selon la revendication 5, dans lequel l'actualisation de la pluralité d'états d'environnement historiques sur la base du second état d'environnement cible comprend :

l'acquisition d'une deuxième date historique pour la pluralité d'états d'environnement historiques respectivement, la deuxième date historique étant une date à laquelle un état d'environnement avait été ajusté aux états d'environnement historiques par le dispositif intelligent ;
la sélection parmi la pluralité d'états d'environnement historiques d'un état d'environnement historique présentant une deuxième date historique la plus rapprochée ; et
le remplacement de l'état d'environnement historique sélectionné par le second état d'environnement cible.

7. Procédé selon l'une quelconque des revendications 1 à 6, comprenant en outre, avant la détermination (102) d'un temps d'exécution requis pour ajuster l'état d'environnement courant à un premier état d'environnement cible :

la sélection d'au moins un temps valable parmi une pluralité de temps historiques, les temps historiques étant des temps pour commander le dispositif intelligent avant le temps courant ;
la détermination d'une seconde valeur pondérée pour le au moins un temps valable ; et
la détermination de la seconde valeur pondérée en tant que temps cible.

8. Procédé selon la revendication 7, dans lequel la détermination (102) d'une seconde valeur pondérée pour le au moins un temps valable comprend :

l'acquisition d'une troisième date historique pour le au moins un temps valable respectivement pour obtenir au moins une troisième date historique, la troisième date historique étant une date pour commander le dispositif intelligent lors du temps valable ;
la détermination d'au moins un second poids à l'aide d'une fonction spécifiée sur la base de la au moins une troisième date historique ; et
le calcul d'une seconde valeur pondérée pour le au moins un temps valable sur la base du au moins un second poids.

9. Procédé selon la revendication 7 ou 8, comprenant en outre :

l'acquisition, à réception d'une seconde instruction d'actualisation, d'un temps de réception pour recevoir la seconde instruction d'actualisation ; et
l'actualisation de la pluralité des temps historiques sur la base du temps de réception.

10. Procédé selon la revendication 9, dans lequel l'actualisation de la pluralité des temps historiques sur la base du temps de réception comprend :

l'acquisition d'une quatrième date historique pour la pluralité de temps historiques respectivement, la quatrième date historique étant une date pour commander le dispositif intelligent lors des temps historiques ;
la sélection parmi la pluralité de temps historiques d'un temps historique présentant une quatrième date historique la plus rapprochée ; et
le remplacement du temps historique sélectionné par le temps de réception.

11. Appareil de commande d'un dispositif intelligent, **caractérisé en ce que** l'appareil comprend des composants pour réaliser un procédé de commande d'un dispositif intelligent selon l'une quelconque des revendications 1 à 10.

12. Dispositif de commande d'un dispositif intelligent, **caractérisé en ce qu'**il comprend :

un processeur (1520) ;
une mémoire (1504) pour stocker des instructions exécutables par un processeur ;
dans lequel le processeur (1520) est configuré pour réaliser un procédé de commande d'un dispositif intelligent selon l'une quelconque des revendications 1 à 10.

13. Programme d'ordinateur incluant des instructions pour exécuter les étapes d'un procédé de commande d'un dispositif intelligent selon l'une quelconque des revendications 1 à 10 lorsque ledit programme est exécuté par un ordinateur.

14. Support d'enregistrement lisible par un ordinateur et présentant enregistré sur celui-ci un programme d'ordinateur incluant des instructions pour exécuter les étapes d'un procédé de commande d'un dispositif intelligent selon l'une quelconque des revendications 1 à 10.

acquiring a current time and a current environment state — 101

determining a running time required to adjust the current environment state to a first target environment state, the first target environment state being an environment state at a target time, the target time being a time for controlling the intelligent device — 102

controlling the intelligent device based on the current time, the running time and the target time — 103

**FIG. 1**

acquiring, by an intelligent device, a current time and a current environment state — 201

determining, by an intelligent device, a running time required to adjust the current environment state to a first target environment state, the first target environment state being an environment state at a target time, the target time being a time for controlling the intelligent device — 202

controlling, by an intelligent device, the intelligent device based on the current time, the running time and the target time — 203

**FIG. 2**

**FIG. 3**

**device for controlling intelligent device**

acquiring module — 401

first determining module — 402

controlling module — 403

**FIG. 4**

**controlling module 403**

adding unit — 4031

controlling unit — 4032

**FIG. 5**

controlling unit 4032

first controlling
sub-unit — 40321

second controlling
sub-unit — 40322

**FIG. 6**

device for controlling intelligent
device

acquiring module — 401

first selecting
module — 404

second determining
module — 405

third determining
module — 406

first determining
module — 402

controlling module — 403

**FIG. 7**

second determining module 405

first acquiring unit 4051

first determining unit 4052

first calculating unit 4053

**FIG. 8**

device for controlling intelligent device

first receiving module 407

first updating module 408

**FIG. 9**

first updating module 408

second acquiring unit 4081

first selecting unit 4082

first replacing unit 4083

**FIG. 10**

device for controlling intelligent device

acquiring module ⟋ 401

second selecting module ⟋ 409

fourth determining module ⟋ 410

fifth determining module ⟋ 411

first determining module ⟋ 402

controlling module ⟋ 403

**FIG. 11**

gourth determining module 410

third acquiring unit ⟋ 4101

second determining unit ⟋ 4102

second calculating unit ⟋ 4103

**FIG. 12**

device for controlling intelligent device

second receiving module ⌐412

second updating module ⌐413

**FIG. 13**

second updating module 413

fourth acquiring unit ⌐4131

second selecting unit ⌐4132

second replacing unit ⌐4133

**FIG. 14**

**FIG. 15**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2013058966 A1